# FASCICULE DE BREVET EUROPEEN

(11) **EP 2 794 442 B1**
(45) Date de publication et mention de la délivrance du brevet: **12.10.2016**
(21) Numéro de dépôt: 12794417.1
(22) Date de dépôt: 30.10.2012
(51) Int. Cl.: B65H 31/30, B07C 1/02, B07C 3/00

(54) **BAC DE STOCKAGE POUR CHARGEMENT ET DÉCHARGEMENT AUTOMATIQUES DE PILES D'OBJETS PLATS SUR CHANT, PROCÉDÉ DE CHARGEMENT ET DE DÉCHARGEMENT**
LAGERBEHÄLTER ZUM AUTOMATISCHEN LADEN UND ENTLADEN VON STAPELN FLÄCHIGER RANDMONTIERTER GEGENSTÄNDE SOWIE LADE- UND ENTLADEVERFAHREN DAFÜR
STORAGE CONTAINER FOR AUTOMATICALLY LOADING AND UNLOADING STACKS OF FLAT ON-EDGE OBJECTS, METHOD FOR LOADING AND UNLOADING

(30) Priorité: 22.12.2011 FR 1162317
(43) Date de publication de la demande: 29.10.2014
(73) Titulaire: Solystic, 92220 Bagneux (FR)
(72) Inventeur: MADAR, François, F-26500 Bourg Les Valence (FR); CARTAL, Bruno, F-26120 Montelier (FR)
(74) Mandataire: Prugneau, Philippe
(86) Numéro de dépôt international: PCT/FR2012/052516
(87) Numéro de publication internationale: WO 2013/093254

(56) Documents cités:
- EP-A1- 0 077 554
- DE-A1- 2 304 331
- DE-B3-102006 031 121
- FR-A1- 2 646 620

## Description

### Domaine technique

L'invention concerne un bac de stockage pour chargement et déchargement automatiques de piles d'objets plats sur chant, le bac de stockage comportant une plaque de fond et des panneaux définissant au moins un compartiment pourvu d'une ouverture prévue à l'opposé de la plaque de fond, le compartiment étant destiné à recevoir au moins une pile d'objets plats dont le chant est destiné à reposer contre la plaque de fond et dont au moins un flanc est destiné à être en appui contre une surface d'appui formée par la face interne d'un des panneaux.

Au sens de l'invention, un objet plat désigne notamment, mais non exclusivement, un envoi postal. Les envois postaux, susceptibles d'être stockés, chargés et déchargés grâce au bac de stockage de l'invention, peuvent présenter des dimensions variables, mais également des caractéristiques mécaniques variables, en particulier en ce qui concerne leur rigidité. Ces envois postaux peuvent être, entre autres, une lettre simple, un magazine, une enveloppe avec ou sans fenêtre, un journal, ou encore un catalogue présenté dans une enveloppe en matière plastique ou en papier, avec ou sans soufflet.

L'invention concerne également un procédé de déchargement d'au moins une pile d'objets plats sur chant d'un bac de stockage dont la plaque de fond reçoit le chant des objets plats et dont au moins une surface d'appui intérieure reçoit un flanc de la pile, la plaque de fond étant traversée par au moins une fente dans laquelle on fait coulisser au moins un doigt mobile entre une position de retrait dans laquelle l'extrémité libre du doigt mobile ne traverse pas la fente et une position active dans laquelle le doigt mobile traverse la fente jusqu'à l'ouverture du bac de stockage de sorte que le chant des objets plats de la pile repose sur l'extrémité libre et puisse être éloigné de la plaque de fond pour assurer le déchargement de la pile hors du bac de stockage.

L'invention concerne enfin un procédé de chargement d'au moins une pile d'objets plats sur chant dans un bac de stockage dont la plaque de fond est destinée à recevoir l'appui du chant des objets plats et dont au moins une surface d'appui intérieure est destinée à recevoir un flanc de la pile, la plaque de fond étant traversée par au moins une fente dans laquelle on fait coulisser au moins un doigt mobile entre une position active dans laquelle le doigt mobile traverse la fente jusqu'à l'ouverture du bac de stockage, de sorte que le chant des objets plats de la pile puisse être placé sur l'extrémité libre du doigt mobile et une position de retrait dans laquelle l'extrémité libre du doigt mobile ne traverse plus la fente de sorte que le chant des objets plats chargés dans le bac de stockage repose sur la plaque de fond.

### Technique antérieure

Ce type de bac de stockage est couramment utilisé, notamment pour le stockage d'objets plats empilés, tels que des envois postaux, destinés à être triés par une machine de tri. De manière connue, au cours du processus de tri des objets plats, des premiers bacs contenant des objets plats sont amenés jusqu'à une machine de tri au niveau de laquelle les premiers bacs sont déchargés manuellement ou automatiquement (si les plis sont stockés à plat). Les objets plats sont ensuite dépilés puis triés selon un plan de tri déterminé avant d'être répartis parmi des sorties de tri au niveau desquelles ils sont empilés. Ces piles d'objets plats peuvent alors être chargées manuellement dans des seconds bacs de stockage. En particulier lorsque les envois postaux sont empilés sur chant, les opérations de chargement et de déchargement des bacs de stockage doivent être réalisées manuellement ce qui complexifie le processus de tri, le rend moins fiable et d'un rendement limité. De plus, l'utilisation de bacs de stockage différents implique un stock important de ces bacs de stockage, une gestion et un circuit des bacs de stockage compliqués.

Le document FR 2 646 620 décrit un bac de stockage et un procédé de déchargement permettant d'automatiser en partie le déchargement. A cet effet, le fond du bac de stockage est pourvu de fentes autorisant le passage de doigts mobiles pour extraire une pile de courrier du bac de stockage. Pour être déchargé, le bac de stockage est plaqué par le dessous sous un plan de déchargement, un bras monté pivotant sur un châssis mobile horizontalement, est alors introduit dans le bac de stockage devant la pile d'objets plats. Le bras est ensuite déplacé dans le bac de stockage jusqu'à être en contact avec l'intercalaire délimitant la pile d'objets plats. Avant le chargement du bac de stockage, un bras est utilisé pour décoller la pile d'une rive contre lesquels les objets plats sont en appui.

Les documents suivants décrivent d'autres bacs de stockage, procédés de déchargement et de chargement de bac de stockage : DE 10 2006 031 121, DE 2 304 331 et EP 0 077 554.

### Exposé de l'invention

Le but de l'invention est de proposer une alternative de bac de stockage, procédé de chargement et procédé de déchargement, autorisant le chargement et le déchargement automatique de piles d'objets plats sur chant en utilisant un même type de bac de stockage tant pour le chargement que pour le déchargement, ce bac de stockage permettant de garantir que tous les objets plats d'une même pile sont chargé ou déchargés en même temps de manière fiable.

A cet effet, l'invention a pour objet un bac de stockage selon la revendication 1.

L'idée à la base de l'invention est de prévoir un bac de stockage comportant au moins une fente dont au moins une extrémité est prévue dans le prolongement directe d'une rainure autorisant le passage, le déplacement automatique et le guidage d'un doigt mobile de sorte que l'extrémité libre du doigt mobile pousse ou retienne le chant des objets plats pour respectivement les extraire ou les introduire, hors du ou dans le bac de stockage. La rainure étant prévue au-delà de la surface d'appui des objets plats délimitant la pile, elle permet de s'assurer que toute la pile d'objets plats est accompagnée par le doigt mobile pendant le chargement et/ou le déchargement. Ainsi, aucun objet plat ne risque de rester coincé entre le doigt mobile et la surface d'appui correspondante. De plus, le guidage du doigt mobile dans la rainure permet en outre de garantir la fiabilité du chargement et du déchargement. Le chargement et le déchargement du bac de stockage en objets plats empilés sur chant peut ainsi être réalisé de manière automatique et fiable.

Le bac de stockage selon l'invention peut avantageusement présenter les particularités suivantes :
- les panneaux comportent au moins deux panneaux externes sensiblement parallèles entre eux, la « au moins une rainure » comporte des premières rainures creusées dans les faces internes des panneaux externes, la face extérieure des panneaux externes est creusée par au moins une rainure complémentaire s'étendant sensiblement parallèlement à la première rainure correspondante par rapport à laquelle elle est décalée transversalement, la rainure complémentaire étant apte à recevoir le passage longitudinal d'au moins un élément de calage destiné à assurer le positionnement de la fente par rapport au doigt mobile ;
- le bac de stockage comporte une pluralité de premières rainures et une pluralité de rainures complémentaires disposées en alternance les unes par rapport aux autres ;
- selon le premier plan médian de chaque panneau externe, les premières rainures et rainures complémentaires sont en partie superposées les une par rapport aux autres de sorte que le premier plan médian coupe simultanément les premières rainures et les rainures complémentaires ;
- le « au moins un compartiment » comporte au moins un premier compartiment et un second compartiment adjacents entre eux et délimités par au moins un panneau définissant une cloison divisant le bac de stockage, la « au moins une rainure » comporte au moins une seconde rainure et une troisième rainure creusées dans les parois internes opposées de la cloison et la « au moins une fente » comporte des premières fentes prévues dans le premier compartiment et des secondes fentes prévues dans le second compartiment ;
- le bac de stockage peut comporter une pluralité de secondes rainures et une pluralité de troisièmes rainures disposées en alternance les unes par rapport aux autres ;
- selon le second plan médian de la cloison, les secondes rainures et troisièmes rainures sont en partie superposées les une par rapport aux autres de sorte que le second plan médian coupe simultanément les secondes rainures et les troisièmes rainures ;
- au moins une partie des premières fentes est disposée en regard d'au moins une partie des secondes fentes, la cloison étant agencée pour que les secondes branches des premières fentes soient superposées aux premières branches des secondes fentes ;
- les premières et secondes fentes sont disposées selon au moins l'une des configurations suivantes combinables entre elles :
   - les premières et secondes fentes ont des orientations identiques ;
   - les premières et secondes fentes ont des orientations inversées entre le premier compartiment et le second compartiment ;
   - les premières fentes ont des orientations inversées entre elles de manière alternées dans le premier compartiment, et les secondes fentes ont des orientations inversées entre elles de manière alternées dans le second compartiment.

L'invention a également pour objet un procédé de déchargement selon la revendication 10.

L'invention a enfin pour objet un procédé de chargement selon la revendication 11.

Dans la présente, les termes première, seconde, troisième et autre ne sont utilisés qu'à titre indicatif et de manière non limitative.

### Description sommaire des dessins

La présente invention sera mieux comprise et d'autres avantages apparaîtront à la lecture de la description détaillée de plusieurs modes de réalisation pris à titre d'exemples nullement limitatifs et illustrés par les dessins annexés, dans lesquels :
- la figure 1 est une vue en perspective de dessus du bac de stockage selon l'invention, à vide, avec les doigts mobiles étant en position de retrait ;
- les figures 2 et 3 sont des vues schématiques en coupe selon le plan de coupe AA de la figure 1 du bac de stockage selon l'invention, contenant une pile d'objets plats, avec le doigt mobile étant respectivement en position de retrait et en position active ;
- les figures 4 à 7 sont des vues schématiques de plusieurs configurations de fentes du bac de stockage selon l'invention.

Sur ces figures, les objets plats en pile sont schématisés par un cadre rectangulaire contenant des hachures irrégulières n'atteignant pas le bord de ce même cadre.

### Description des modes de réalisation

En référence aux figures, le bac de stockage 1 selon l'invention comporte de manière classique une plaque de fond 2, des panneaux externes 4A, 4B sensiblement parallèles deux à deux et une cloison 5 sensiblement parallèle à deux des panneaux externes 4A et définissant, avec la plaque de fond 2, des premier et second compartiments 6, 7 adjacents entre eux. Le bac de stockage 1 comporte une ouverture 9 opposée à la plaque de fond 2 par laquelle des piles d'objets plats 100 peuvent être chargés et déchargés dans les premier et second compartiments 6, 7. Dans l'exemple illustré, les premier et second compartiments 6, 7 sont sensiblement de mêmes dimensions, ils peuvent également être de dimensions différentes.

Les faces internes des panneaux externes 4A, sensiblement parallèles à la cloison 5, sont chacune creusée par des premières rainures 70 sensiblement parallèles entre elles et s'étendent longitudinalement de la plaque de fond 2 à l'ouverture 9. Les faces internes des panneaux externes 4A présentent ainsi une première surface d'appui 72 apte à recevoir l'appui du flanc de la pile d'objets plats contenue dans le bac de stockage 1, cette première surface d'appui 72 étant interrompue par les premières rainures 70. Comme décrit plus loin, ces premières rainures 70 sont aptes à recevoir l'insertion longitudinale des bras d'un peigne dimensionnés pour pouvoir être insérés dans les premières rainures 70 sans contact avec le flanc des objets plats délimitant la pile d'objets plats et en appui contre la première surface d'appui 72. Ainsi, lorsqu'une pile d'objets plats 100 est stockée dans l'un ou l'autre, ou les deux premier et second compartiments 6, 7 du bac de stockage 1, le chant des objets plats 100 repose sur la plaque de fond 2 et les flancs opposés de la pile d'objets plats 100 sont en appui contre les premières surfaces d'appui 72, sans contact avec le fond des premières rainures 70.

Les faces externes des panneaux externes 4A, sensiblement parallèles à la cloison 5, sont chacune creusée par des rainures complémentaires 71 sensiblement parallèles entre elles et aux premières rainures 70. Les rainures complémentaires 71 sont décalées transversalement par rapport aux premières rainures 70 avec lesquelles elles sont disposées en alternance. Les rainures complémentaires 71 s'étendent sur toute la hauteur du bac de stockage 1. Ces rainures complémentaires 71 sont aptes à recevoir le passage longitudinal d'éléments de calage (non représentés) destinés à assurer le positionnement du bac de stockage 1 pendant le chargement et/ou le déchargement. Ces éléments de calage sont par exemple des languettes interposées entre les doigts mobiles desquels elles sont non solidaires.

Dans l'exemple illustré, les panneaux externes 4A sont formés par des plaques fines conformées pour définir les premières rainures 70 et les rainures complémentaire 71. Selon le premier plan médian P1 de chaque panneau externe 4A, les premières rainures 70 et les rainures complémentaires 71 sont en partie superposées les unes par rapport aux autres. Ainsi, le premier plan médian P1 de chaque panneau externe 4A coupe simultanément les premières rainures 70 et les rainures complémentaire 71.

Les deux faces internes opposées de la cloison 5 sont chacune respectivement creusée par des secondes rainures 80 et troisièmes rainures 90 sensiblement parallèles entre elles et avec les premières rainures 70. Les secondes et troisièmes rainures 80, 90 s'étendent longitudinalement de la plaque de fond 2 à l'ouverture 9. Les faces internes de la cloison 5 présentent ainsi respectivement une seconde et une troisième surface d'appui 82, 92 aptes chacune à recevoir l'appui du flanc de la pile d'objets plats 100. Les seconde et une troisième surfaces d'appui 82, 92 sont interrompues par les secondes rainures 80 et troisièmes rainures 90. Dans l'exemple illustré, la cloison 5 est formée par une plaque fine conformée pour définir les secondes et troisièmes rainures 80, 90. Selon le second plan médian P2 de la cloison 5, les secondes et troisièmes rainures 80, 90 sont en partie superposées les unes par rapport aux autres. Ainsi, le second plan médian P2 de la cloison 5, coupe simultanément les secondes et troisièmes rainures 80, 90. La cloison 5 est formée de premières portions ayant chacune globalement une forme en S et reliées entre elles par des secondes portions rectilignes. Chaque lacet du S forme simultanément une seconde rainure 80 pour le premier compartiment 6 et une troisième rainure 90 pour le second compartiment 7.

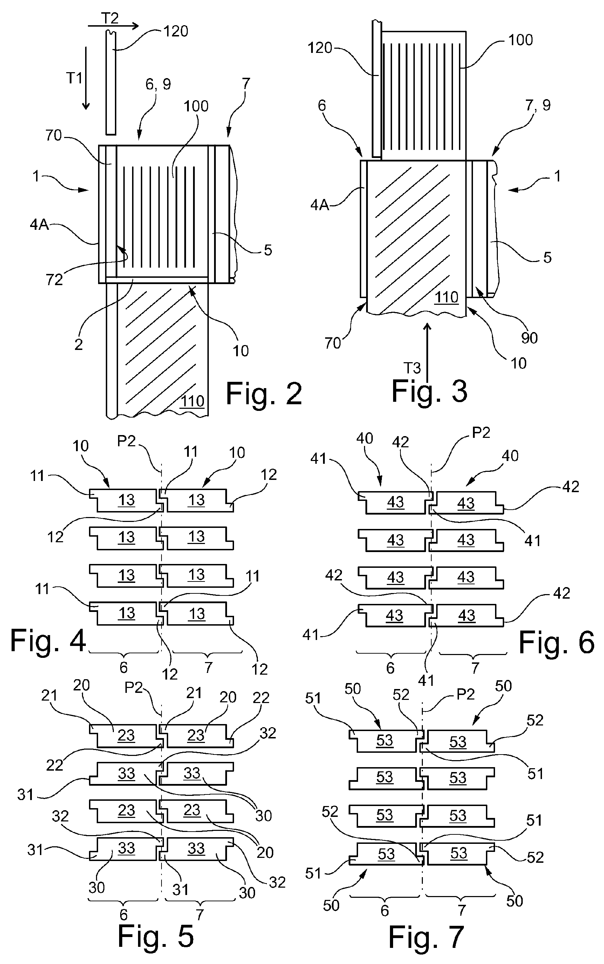

Dans les premier et second compartiments 6, 7, la plaque de fond 2 est traversée par des fentes 10, disjointes au niveau de la cloison 5 dont les extrémités sont prévues dans le prolongement direct respectivement des premières rainures 70, secondes rainures 80 et troisièmes rainures 90. Ainsi, les fentes s'étendent au-delà respectivement des premières, secondes et troisièmes surfaces d'appui 72, 82, 92. Ces fentes 10 sont destinées à autoriser individuellement le passage, au travers de la plaque de fond 2, de doigts mobiles 110 coulissants entre une position de retrait (représentée sur la figure 2) dans laquelle les extrémités libres des doigts mobiles 110 ne traversent pas ladite fente 10 et une position active (représentée sur la figure 3) dans laquelle les doigts mobiles 110 traversent la fente et sont engagés dans les premières, secondes et troisièmes rainures 70, 80, 90. Les doigts mobiles 110 sont guidés pendant leur déplacement, de la plaque de fond 2 à l'ouverture 9, par les premières, secondes et troisièmes rainures 70, 80, 90. Dans la position active, le chant des objets plats 100 de la pile contenue dans le bac de stockage 1 repose sur l'extrémité libre des doigts mobiles 110 correspondant et peut être éloigné ou rapproché de la plaque de fond 2 pour charger ou décharger les objets plats 100 dans le ou hors du bac de stockage 1. Les doigts mobiles 110 prévus en regard des fentes 10 ont des formes complémentaires à celles des fentes 10 et des dimensions légèrement inférieures pour pouvoir coulisser au travers. Pour le déchargement de chaque premier, second compartiment 6, 7, les doigts mobiles 110 sont insérés par le dessous de la plaque de fond 2 pour s'engager respectivement dans le premier, second compartiment 6, 7. Il est possible d'insérer les doigts mobiles 110 successivement ou simultanément dans le premier compartiment 6 et dans le second compartiment 7. Les mêmes doigts mobiles 110, peuvent par ailleurs servir l'un après l'autre pour le premier compartiment 6 puis pour le second compartiment 7. Lors de leur insertion dans le premier, second compartiment 6, 7, les doigts mobiles 110 éloignent le chant des objets plats 100 de la plaque de fond 2 de sorte que les objets plats 100 se trouvent soulevés par rapport à la plaque de fond 2 jusqu'à être extraits du bac de stockage 1. Le guidage des doigts mobiles 110 par les premières, secondes et troisièmes rainures 70, 80, 90 permet d'éviter qu'ils ne dévient de leur trajectoire, au risque que la pile d'objets plats 100 devienne instable ou que certains objets plats se trouvent coincés entre des doigts mobiles 110 et les panneaux externes 4A. Pour le chargement du bac de stockage 1, à l'inverse de précédemment décrit, les doigts mobiles 110, sont préalablement insérés respectivement dans le premier, second compartiment 6, 7. On dispose alors les objets plats 100 sur chant sur les extrémités libres des doigts mobiles 110 avant de rétracter les doigts mobiles 110 guidés par les premières, secondes et troisièmes rainures 70, 80, 90, jusqu'à leur position de retrait, en les descendant progressivement dans le bac de stockage 1 au travers des fentes 10 pour accompagner l'insertion des objets plats 100 dans leurs premier, second compartiments 6, 7 respectifs. Lorsque les doigts mobiles 110 sont complètement escamotés sous la plaque de fond 2, ils sont dans leur position de retrait dans laquelle le chant des objets plats 100 est en appui contre la plaque de fond 2. De manière avantageuse, la direction principale de chaque fente 10, à savoir selon la longueur de la fente 10 correspondante, coupe la cloison 5. Les fentes 10 s'étendent par exemple sensiblement perpendiculairement à la cloison 5 et aux panneaux externes 4A se faisant face, et les objets plats 100 sont disposés de sorte que leur chant soit sensiblement parallèle à la cloison 5 et donc sensiblement perpendiculaire aux fentes 10. Le fait que les fentes 10 s'étendent au-delà des première, seconde et troisième surfaces d'appui 72, 82, 92 permet de s'assurer que tous les objets plats 100 reposent sur les extrémités libres des doigts mobiles 110. Aucun objet plat 100 ne risque de rester coincer entre les doigts mobiles 110 et la première, seconde, et/ou troisième surfaces d'appui 72, 82, 92 correspondante. Tous les objets plats 100 peuvent donc être extraits des premier et second compartiments 6, 7 lors du déchargement et être accompagnés lors du chargement.

Dans l'exemple illustré, les panneaux externes 4A, 4B et la cloison 5 sont formés par des plaques fines conformées pour définir les premières, secondes et troisièmes rainures 72, 82, 92. La cloison 5 comporte des premières portions ayant chacune globalement une forme en S reliées entre elles par des secondes portions rectilignes. Chaque lacet du S forme simultanément une seconde rainure 80 pour le premier compartiment 6 et une troisième rainure 90 pour le second compartiment 7. Ainsi, selon le second plan médian P2 de la cloison 5, les première et seconde rainures 80, 90 se chevauchent. L'arête libre de chaque forme en S dépasse de la seconde portion rectiligne correspondante. Cette construction particulière permet d'améliorer le guidage en translation des doigts mobiles 110. Par ailleurs, la superposition selon chaque premier plan médian P1 des premières rainures 70 et des rainures complémentaires 71 permet d'assurer une continuité d'appui entre les extrémités des doigts mobiles 110 et les éléments de calage. Ainsi, le chant des objets plats 100 est en permanence porté par l'une des extrémités des doigts mobiles 110 ou un élément de calage lorsque la pile d'objets plats 100 est glissée latéralement au-dessus du bac de stockage 1 pour être chargée ou déchargée.

Dans l'exemple illustré par la figure 4, chaque fente 10 présente globalement une forme en Z comportant des première et seconde branches 11, 12 définissant les extrémités de la fente 10 et une tige 13 les séparant. Les première, seconde et troisième rainures (non représentées) sont prévues dans le prolongement direct des première et seconde branches 11, 12 et présentent sensiblement la même forme et les mêmes dimensions que les première et seconde branches 11, 12. Dans cet exemple toutes les fentes 10 sont sensiblement identiques entre elles, en forme et en dimensions, disposées sensiblement parallèlement entre elles et avec la même orientation entre le premier et second compartiment 6, 7. Selon le second plan médian P2, les secondes branches 12 des fentes 10 du premier compartiment 6 sont superposées en alternance avec les premières branches 11 des fentes 10 du second compartiment 7.

Dans l'exemple illustré par la figure 5, un premier groupe de fentes 20 présente globalement une forme en Z, un second groupe de fentes 30 présente globalement une forme de Z inversé. Les formes de Z et de Z inversé comportent chacune des première et seconde branches 21, 22 ; 31, 32 définissant les extrémités de chaque fente 20, 30 et une tige 23, 33 les séparant. Les fentes 20 du premier compartiment 6 sont sensiblement identiques en forme et en dimensions entre elles, disposées sensiblement parallèlement, en rangée à intervalles sensiblement réguliers. De même, les formes du second compartiment sont sensiblement identiques en forme et en dimensions entre elles, disposées sensiblement parallèlement, en rangée à intervalles sensiblement réguliers. Les fentes 20, 30 du second compartiment 7 sont orientées dans le même sens que les fentes 20, 30 du premier compartiment 6. Dans un même premier compartiment 6, second compartiment 7, les fentes 20, 30 ont, de manière alternée, des orientations inversées d'une fente 20 à l'autre 30. Selon le second plan médian P2, les secondes branches 22 des fentes 20 du premier compartiment 6 sont superposées en alternance avec les premières branches 21 des fentes 20 du second compartiment 7.

Dans l'exemple illustré par la figure 6, chaque fente 40 présente globalement une forme en T comportant des première et seconde branches 41, 42 définissant les extrémités de la fente et une tige 43 les séparant. Toutes les fentes 40 sont sensiblement identiques en forme et en dimensions entre elles et disposées sensiblement parallèles entre elles. Les fentes 40 du premier compartiment 6 sont disposées en rangée, à intervalles sensiblement réguliers et avec la même orientation. Les fentes 40 du second compartiment 7 sont disposées en rangée, à intervalles sensiblement réguliers et avec la même orientation. Les fentes 40 du premier compartiment 6 ont une orientation inversée par rapport à celle du second compartiment 7. Selon le second plan médian P2, les secondes branches 42 des fentes 40 du premier compartiment 6 chevauchent les premières branches 41 des fentes 40 du second compartiment 7.

Dans l'exemple illustré par la figure 7, chaque fente 50 présente globalement une forme en T comportant des première et seconde branches 51, 52, définissant les extrémités de la fente et une tige 53, les séparant. Toutes les fentes 50 sont sensiblement identiques en forme et en dimensions entre elles et disposées sensiblement parallèles entre elles. Les fentes 50 du premier compartiment 6 sont disposées en rangée, à intervalles sensiblement réguliers. De même, les fentes 50 du second compartiment 7 sont disposées en rangée, à intervalles sensiblement réguliers. Dans un même premier, second compartiment 6, 7, les fentes 50 ont, de manière alternée, des orientations inversées d'une fente 50 à l'autre. De plus, les fentes 50 du second compartiment 7 ont des orientations inversées par rapport à celles du premier compartiment 6. Selon le second plan médian P2, les secondes branches 52 des fentes 50 du premier compartiment 6 chevauchent les premières branches 51 des fentes 50 du second compartiment 7.

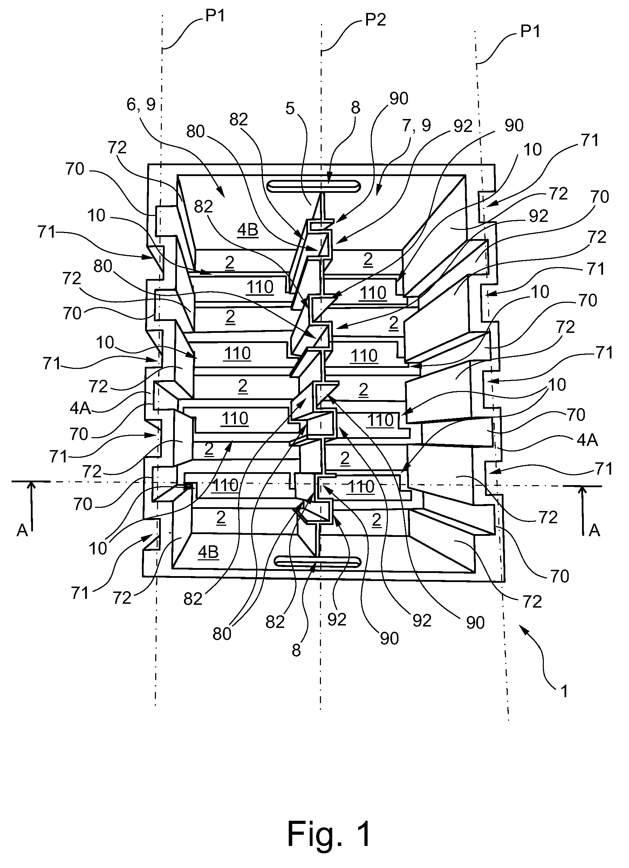

Tel qu'illustré sur la figure 1, les panneaux externes 4B se faisant face peuvent comporter des orifices oblongs 8 servant de poignées pour saisir le bac de stockage 1

Selon une configuration non représentée, les fentes peuvent avoir une configuration miroir à l'une des configurations décrite précédemment ou toute autre configuration adaptée. De même, chaque compartiment peut comporter des fentes différentes en formes et/ou en dimensions. Le bac de stockage peut également comporter un nombre de compartiments supérieur. Selon une variante de réalisation non représentée, chaque fente n'est associée qu'à une seule rainure.

Selon une autre variante de réalisation non représentée, le bac de stockage ne comporte pas de cloison. Dans ce cas, les fentes s'étendent d'un panneau externe à l'autre panneau externe opposé.

Les rainures et/ou rainures complémentaires peuvent être continues ou discontinues. Elles peuvent ainsi être formées par des plots répartis sur la hauteur des panneaux externes et/ou de la cloison.

Selon un autre mode de réalisation, le bac de stockage peut comporter une fente unique associée à une ou deux rainures.

Selon encore un autre mode de réalisation non représenté, les fentes n'ont pas toutes les mêmes formes et/ou dimensions et peuvent également être disposées à intervalles irréguliers et/ou non parallèlement entre elles.

En référence aux figures aux figures 2 et 3, le bac de stockage 1 est disposé sur une zone d'accueil pourvue d'éléments de calage (non représentés) aptes à coopérer avec les rainures complémentaires (non représentées sur ces figures) pour assurer le positionnement précis du bac de stockage 1. Une fois le bac de stockage 1 calé par les éléments de calage, les doigts mobiles 110 sont en regard et au-dessus des fentes 10, sans contact avec les objets plats 100. Les bras 120 d'un peigne disposé au-dessus de la zone d'accueil sont en regard et au-dessus des premières rainures 70. Pour décharger la pile d'objets plats 100 du bac de stockage 1, dans un premier temps, on insère les bras 120 dans les premières rainures 70, par translation verticale descendante selon la première direction T1. Cette translation selon la première direction T1 se déroule sans que l'objet plat 100 délimitant le flanc de la pile et en contact avec la surface d'appui 72 du premier compartiment 6 ne soit en contact avec les bras 120 du peigne. Dans un second temps, on déplace les bras 120 selon une seconde direction horizontale pour tasser les objets plats et les décaler de la paroi surface d'appui 72 pour éviter le frottement des objets plats 100 sur cette surface d'appui 72 et faciliter leur déchargement. Dans un troisième temps, on déplace simultanément les doigts mobiles 110 et les bras 120, par translation verticale ascendante selon la troisième direction T3 parallèle et opposée à la première direction T1. Au cours de cette translation selon la troisième direction T3, les doigts mobiles 110 traversent les fentes 10, s'engagent dans le premier compartiment 6 et dans les premières rainures 70 de sorte à ce que le chant des objets plats 100 contenus dans le premier compartiment 6 repose sur l'extrémité libre des doigts mobiles 110. Les doigts mobiles 110 s'étendant dans les premières rainures 70 permettent d'éviter qu'un objet plat 100 ne reste coincé entre le doigt mobile 110 et la surface d'appui 72 du premier compartiment 6. Ainsi, on a l'assurance que toute la pile d'objets plats 100 est déplacée en même temps. Une fois la pile d'objets plats 100 déplacée au-dessus des panneaux 4A externe du bac de stockage, les objets plats 100 peuvent être déplacés latéralement pour achever le déchargement. Le chargement est obtenu en réalisant des opérations similaires en ordre inverse.

Il ressort clairement de la description que le bac de stockage 1 selon l'invention permet, de manière simple et fiable, d'autoriser le chargement et le déchargement automatique de pile d'objets plats 100 sur chant, par déplacement de doigts mobiles 110 aux travers de fentes10 ; 20, 30 ; 40 ; 50 prévues dans la plaque de fond 2 du bac de stockage 1. Pendant ces déplacements, le chant des objets plats 100 en pile repose sur les extrémités libres des doigts mobiles 110. Les premières, secondes et troisièmes rainures 70, 80, 90 permettent de recevoir les doigts mobiles 110 au-delà des objets plats et ainsi de s'assurer que toute la pile est chargée ou déchargée. De plus Les premières, secondes et troisièmes rainures 70, 80, 90 permettent de recevoir les bras d'un peigne permettant d'éloigner le flanc de la pile d'objets plats 100 de la surface d'appui 72 pour fiabiliser et faciliter le chargement et le déchargement. Le même bac de stockage 1 peut ainsi être utilisé indifféremment pour charger des objets plats 100 dans les premier et second compartiments ou pour les en décharger. Il est entendu que l'invention peut s'étendre à un chargement/déchargement de plusieurs compartiments simultanément par bac de stockage.

## Revendications

1. Bac de stockage (1) pour chargement et déchargement automatiques de piles d'objets plats (100) sur chant, ledit bac de stockage (1) comportant une plaque de fond (2) et des panneaux (4A, 4B, 5) parallèles deux à deux et définissant au moins un compartiment (6, 7) pourvu d'une ouverture (9) prévue à l'opposé de ladite plaque de fond (2), ledit compartiment (6, 7) étant destiné à recevoir au moins une pile d'objets plats (100) dont le chant est destiné à reposer contre ladite plaque de fond (2) et dont au moins un flanc est destiné à être en appui contre une surface d'appui (72, 82, 92) formée par la face interne d'un desdits panneaux (4A, 5), dans lequel au moins deux desdites surfaces d'appui (72, 82, 92) se faisant face sont creusées chacune par au moins une rainure (70, 80, 90) dont le fond est en retrait, lesdites rainures (70, 80, 90) étant prévues en regard l'une de l'autre deux à deux et s'étendant longitudinalement de ladite plaque de fond (2) jusqu'à ladite ouverture (9), **caractérisé en ce que** chaque rainure (70, 80, 90) étant apte à recevoir l'insertion longitudinale, sans contact avec lesdits objets plats (100), du bras d'un peigne destiné à, après son insertion, éloigner latéralement ledit flanc de ladite pile de ladite surface d'appui (72, 82, 92) correspondante, **en ce que** ladite plaque de fond (2) est traversée par au moins une fente (10 ; 20, 30 ; 40 ; 50), dont chacune des extrémités est prévue dans le prolongement direct respectivement d'une desdites rainures (70,80,90), ladite fente (40 ; 50) présentant globalement une forme choisie entre un T et un Z dont la première et la seconde branche (11, 12 ; 21, 22 ; 31, 32 ; 41, 42 ; 51, 52) définissent les extrémités de ladite fente (40 ; 50) et une tige(43, 53, 13, 23, 33) les séparant et présentent chacune un profil sensiblement identique respectivement à celui de ladite rainure (70, 80, 90) correspondante, ladite fente (10 ; 20, 30 ; 40 ; 50) et chacune desdites rainures (70, 80, 90) étant aptes à autoriser le passage d'au moins un doigt mobile (110) coulissant entre une position de retrait dans laquelle l'extrémité libre dudit doigt mobile (110) ne traverse pas ladite fente (10 ; 20, 30 ; 40 ; 50) et une position active dans laquelle ledit doigt mobile (110) traverse ladite fente (10 ; 20, 30 ; 40 ; 50) et est engagé dans l'une desdites rainures (70, 80, 90) de sorte que le chant de tous lesdits objets plats (100) de ladite pile repose sur ladite extrémité libre et puisse être éloigné ou rapproché de ladite plaque de fond (2) pour assurer le déchargement, chargement automatique desdits objets plats (100) respectivement dans ledit, hors dudit bac de stockage (1) sans contact entre ledit flanc de ladite pile et ladite surface d'appui (72, 82, 92).

2. Bac de stockage (1) selon la revendication précédente, **caractérisé en ce que** lesdits panneaux comportent au moins deux panneaux (4A) externes sensiblement parallèles entre eux, **en ce que** ladite « au moins une rainure » comporte des premières rainures (70) creusées dans les faces internes desdits panneaux (4A) externes, **en ce que** la face extérieure desdits panneaux (4A) externes est creusée par au moins une rainure complémentaire (71) s'étendant sensiblement parallèlement à ladite première rainure (70) correspondante par rapport à laquelle elle est décalée transversalement, ladite rainure complémentaire (71) étant apte à recevoir le passage longitudinal d'au moins un élément de calage destiné à assurer le positionnement de ladite fente (10 ; 20, 30 ; 40 ; 50) par rapport audit doigt mobile (110).

3. Bac de stockage (1) selon la revendication précédente, **caractérisé en ce qu'**il comporte une pluralité de premières rainures (70) et de rainures complémentaires (71) disposées en alternance les unes par rapport aux autres.

4. Bac de stockage (1) selon la revendication précédente, **caractérisé en ce que**, selon le premier plan médian (P1) de chaque panneau (4A) externe, lesdites premières rainures (70) et rainures complémentaires (71) sont en partie superposées les une par rapport aux autres de sorte que ledit premier plan médian (P1) coupe simultanément lesdites premières rainures (70) et lesdites rainures complémentaires (71).

5. Bac de stockage (1) selon au moins l'une quelconque des revendications précédentes, **caractérisé en ce que** ledit « au moins un compartiment » comporte au moins un premier compartiment (6) et un second compartiment (7) adjacents entre eux et délimités par au moins un panneau définissant une cloison (5) divisant ledit bac de stockage (1), **en ce que** ladite « au moins une rainure » comporte au moins une seconde rainure (80) et une troisième rainure (90) creusées dans les parois internes opposées de ladite cloison (5) et **en ce que** ladite « au moins une fente » comporte des premières fentes (10 ; 20, 30 ; 40 ; 50) prévues dans ledit premier compartiment (6) et des secondes fentes (10 ; 20, 30 ; 40 ; 50) prévues dans ledit second compartiment (7).

6. Bac de stockage (1) selon la revendication précédente, **caractérisé en ce qu'**il comporte une pluralité de secondes rainures (80) et de troisièmes rainures (90) disposées en alternance les unes par rapport aux autres.

7. Bac de stockage (1) selon la revendication précédente, **caractérisé en ce que**, selon le second plan médian (P2) de ladite cloison (5), lesdites secondes rainures (80) et troisièmes rainures (90) sont en partie superposées les une par rapport aux autres de sorte que ledit second plan médian (P2) coupe simultanément lesdites secondes rainures (80) et lesdites troisièmes rainures (90.

8. Bac de stockage (1) selon les revendication 5 et 7 et la revendication 1, **caractérisé en ce qu'**au moins une partie desdites premières fentes (10 ; 20, 30 ; 40 ; 50) est disposée en regard d'au moins une partie desdites secondes fentes (10 ; 20, 30 ; 40 ; 50), ladite cloison (5) étant agencée pour que lesdites secondes branches desdites premières fentes (10 ; 20, 30 ; 40 ; 50) soient superposées auxdites premières branches desdites secondes fentes (10 ; 20, 30 ; 40 ; 50).

9. Bac de stockage (1) selon au moins la revendication 8, **caractérisé en ce que** lesdites premières et secondes fentes (10 ; 20, 30 ; 40 ; 50) sont disposées selon au moins l'une des configurations suivantes combinables entre elles :
- les premières et secondes fentes (10 ; 20, 30) ont des orientations identiques ;
- les premières et secondes fentes (40 ; 50) ont des orientations inversées entre ledit premier compartiment (6) et ledit second compartiment (7) ;
- lesdites premières fentes (20, 30 ; 50) ont des orientations inversées entre elles de manière alternées dans ledit premier compartiment (6), et lesdites secondes fentes (20, 30 ; 50) ont des orientations inversées entre elles de manière alternées dans ledit second compartiment (7).

10. Procédé de déchargement d'au moins une pile d'objets plats (100) sur chant d'un bac de stockage (1) dont la plaque de fond (2) reçoit le chant desdits objets plats (100) et dont au moins deux surfaces d'appui (72, 82, 92) intérieures se faisant face reçoivent un flanc de ladite pile, ladite plaque de fond (2) étant traversée par au moins une fente (10 ; 20, 30 ; 40 ; 50) dans laquelle on fait coulisser au moins un doigt mobile (110) entre une position de retrait dans laquelle l'extrémité libre dudit doigt mobile (110) ne traverse pas ladite fente (10 ; 20, 30 ; 40 ; 50) et une position active dans laquelle ledit doigt mobile (110) traverse ladite fente (10 ; 20, 30 ; 40 ; 50) jusqu'à l'ouverture (9) dudit bac de stockage (1) de sorte que le chant desdits objets plats (100) de ladite pile repose sur ladite extrémité libre et puisse être éloigné de ladite plaque de fond (2) pour assurer le déchargement de ladite pile hors dudit bac de stockage (1 dans lequel on utilise au moins un bac de stockage (1) comportant au moins une rainure (70) creusée dans chacune desdites surfaces d'appui (72, 82, 92) et s'étendant longitudinalement de ladite plaque de fond (2) à ladite ouverture (9), **caractérisé en ce qu'**avant le coulissement dudit doigt mobile (110), on introduit dans un premier temps au moins un bras (120) dans chacune desdites rainures (70) de sorte que ledit bras (120) soit sans contact avec le flanc de ladite pile contenue dans ledit bac de stockage (1) et que, dans un second temps on décale ledit bras (120) de sorte à éloigner ledit flanc de ladite surface d'appui (72) correspondante, et **en ce que** pendant le coulissement dudit doigt mobile (110) entre sa position de retrait et sa position active, on déplace simultanément ledit bras (120)..

11. Procédé de chargement d'au moins une pile d'objets plats (100) sur chant dans un bac de stockage (1) dont la plaque de fond (2) est destinée à recevoir l'appui du chant desdits objets plats (100) et dont au moins deux surfaces d'appui (72, 82, 92) intérieures se faisant face sont destinées à recevoir un flanc de ladite pile, ladite plaque de fond (2) étant traversée par au moins une fente (10 ; 20, 30 ; 40 ; 50) dans laquelle on fait coulisser au moins un doigt mobile (110) entre une position active dans laquelle ledit doigt mobile (110) traverse ladite fente (10 ; 20, 30 ; 40 ; 50) jusqu'à l'ouverture (9) dudit bac de stockage (1), de sorte que le chant desdits objets plats (100) de ladite pile puisse être placé sur l'extrémité libre dudit doigt mobile (110) et une position de retrait dans laquelle l'extrémité libre dudit doigt mobile (110) ne traverse plus ladite fente (10 ; 20, 30 ; 40 ; 50) de sorte que le chant desdits objets plats (100) chargés dans ledit bac de stockage (1) repose sur ladite plaque de fond (2), dans lequel on utilise au moins un bac de stockage (1) comportant au moins une rainure (70) creusée dans chacune desdites surfaces d'appui (72, 82, 92) et s'étendant longitudinalement de ladite plaque de fond (2) à ladite ouverture (9), **caractérisé en ce qu'**avant le coulissement dudit doigt mobile (110), on décale au moyen d'au moins un bras (120) ledit flanc de chacune desdites surfaces d'appui (72) et que, pendant ledit coulissement, on introduit ledit bras (120) dans ladite rainure (70) correspondante de sorte que ledit flanc de ladite pile ne soit pas en contact avec ladite surface d'appui (72), et **en ce que** pendant le coulissement dudit doigt mobile (110) entre sa position active et sa position de retrait, on déplace simultanément ledit bras (120).

## Patentansprüche

1. Lagerbehältnis (1) zum automatischen Be- und Entladen von Stapeln flacher Gegenstände (100) auf Kante, wobei das Lagerbehältnis (1) eine Grundplatte (2) und paarweise parallele Platten (4A, 4B, 5) umfasst, die wenigstens ein mit einer der Grundplatte (2) gegenüberliegend vorgesehenen Öffnung (9) versehenes Abteil (6, 7) definieren, wobei das Abteil (6, 7) dazu bestimmt ist, wenigstens einen Stapel flacher Gegenstände (100) aufzunehmen, dessen Kante dazu bestimmt ist, an der Grundplatte (2) zu ruhen und von dem wenigstens eine Flanke dazu bestimmt ist, an einer von der Innenseite der Platten (4A, 5) gebildeten Stützfläche (72, 82, 92) anzuliegen, wobei wenigstens zwei der sich gegenüber stehenden Stützflächen (72, 82, 92) jeweils durch wenigstens eine Rinne (70, 80, 90) ausgespart sind, deren Grund zurückversetzt ist, wobei die Rinnen (70, 80, 90) einander paarweise zugekehrt vorgesehen sind und sich längs von der Grundplatte (2) bis zu der Öffnung (9) erstrecken,
**dadurch gekennzeichnet,**
**dass** jede Rinne (70, 80, 90) ausgebildet ist zum Aufnehmen, in längsverlaufendem Einführen, ohne Kontakt mit den flachen Gegenständen (100), des Arms eines Kamms, der dazu bestimmt ist, nach seinem Einführen seitlich die Flanken des Stapels von der entsprechenden Stützfläche (72, 82, 92) zu entfernen,
**dass** die Grundplatte (2) durch wenigstens einen Schlitz (10; 20, 30; 40; 50) durchsetzt ist, dessen jedes Ende in einer direkten Verlängerung jeweils einer der Rinnen (70, 80, 90) vorgesehen ist, wobei der Schlitz (40; 50) im Wesentlichen eine zwischen einem T und Z gewählte Form aufweist, deren erster und zweiter Schenkel (11, 12; 21, 22; 31, 32; 41, 42; 51, 52) die Enden des Schlitzes (40; 50) bilden und deren diese trennender Strich (43, 53, 13, 23, 33) jeweils ein im Wesentlichen zu demjenigen der entsprechenden Rinne (70, 80, 90) identisches Profil aufweist, wobei der Schlitz (10; 20, 30; 40; 50) und jede der Rinnen (70, 80, 90) in der Lage sind, den Durchgang von wenigstens einem beweglichen Finger (110) zuzulassen, der zwischen einer Rückzugsposition, in der das freie Ende des beweglichen Fingers (110) den Schlitz (10; 20, 30; 40; 50) nicht durchsetzt, und einer aktiven Position, in der der bewegliche Finger (110) den Schlitz (10; 20, 30; 40; 50) durchsetzt und in eine der Rinnen (70, 80, 90) eingeführt ist, derart, dass die Kante aller flachen Gegenstände (100) des Stapels auf dem freien Ende ruht und von der Grundplatte (2) entfernt oder herangeführt werden kann, um das automatische Entladen bzw. Beladen der flachen Gegenstände (100) jeweils aus dem bzw. in das Lagerbehältnis (1) ohne Kontakt zwischen der Flanke des Stapels und der Stützfläche (72, 82, 92) sicherzustellen, verlagerbar ist.

2. Lagerbehältnis (1) nach dem vorhergehenden Anspruch, **dadurch gekennzeichnet, dass** die Platten wenigstens zwei äußere, im Wesentlichen zueinander parallele Platten (4A) umfassen, dass die wenigstens eine Rinne erste Rinnen (70) umfasst, die in den Innenseiten der äußeren Platten (4A) ausgespart sind, dass die Außenseite der äußeren Platten (4A) durch wenigstens eine komplementäre Rinne (71) ausgespart ist, die sich im Wesentlichen parallel zu der ersten entsprechenden Rinne (70) erstreckt, in Bezug auf welche sie quer versetzt ist, wobei die komplementäre Rinne (71) in der Lage ist, den Längsdurchgang von wenigstens einem Halteelement aufzunehmen, das dazu bestimmt ist, die Positionierung des Schlitzes (10; 20, 30; 40; 50) in Bezug auf den beweglichen Finger (110) sicherzustellen.

3. Lagerbehältnis (1) nach dem vorhergehenden Anspruch, **dadurch gekennzeichnet, dass** es eine Mehrzahl von ersten Rinnen (70) und von komplementären Rinnen (71) umfasst, die alternierend zueinander angeordnet sind.

4. Lagerbehältnis (1) nach dem vorhergehenden Anspruch, **dadurch gekennzeichnet, dass** die ersten Rinnen (70) und die komplementären Rinnen (71) teilweise gegenseitig gemäß einer ersten Mittelebene (P1) jeder äußeren Platte (4A) überlagert sind, derart, dass die erste Mittelebene (P1) gleichzeitig die ersten Rinnen (70) und die komplementären Rinnen (71) schneidet.

5. Lagerbehältnis (1) nach einem der vorhergehenden Ansprüche, **dadurch gekennzeichnet, dass** das wenigstens eine Abteil wenigstens ein erstes Abteil (6) und ein zweites Abteil (7), die zueinander benachbart sind und die durch wenigstens eine eine Wand (5) definierende Platte, die das Lagerbehältnis (1) teilt, abgegrenzt sind, umfasst, dass die wenigstens eine Rinne wenigstens eine zweite Rinne (80) und eine dritte Rinne (90) umfasst, die in den einander abgekehrten Innenwandungen der Wand (5) ausgespart sind, und dass der wenigstens eine Schlitz in dem ersten Abteil (6) vorgesehene erste Schlitze (10; 20, 30; 40; 50) und in dem zweiten Abteil (7) vorgesehene zweite Schlitze (10; 20, 30; 40; 50) umfasst.

6. Lagerbehältnis (1) nach dem vorhergehenden Anspruch, **dadurch gekennzeichnet, dass** es eine Mehrzahl von zweiten Rinnen (80) und von dritten Rinnen (90), die zueinander abwechselnd angeordnet sind, umfasst.

7. Lagerbehältnis (1) nach dem vorhergehenden Anspruch, **dadurch gekennzeichnet, dass** die zweiten Rinnen (80) und die dritten Rinnen (90) teilweise einander gemäß der zweiten Mittelebene (P2) der Wand (5) überlagert sind, derart, dass die zweite Mittelebene (P2) gleichzeitig die zweiten Rinnen (80) und die dritten Rinnen (90) schneidet.

8. Lagerbehältnis (1) nach den Ansprüchen 5 und 7 und Anspruch 1, **dadurch gekennzeichnet, dass** wenigstens ein Teil der ersten Schlitze (10; 20, 30; 40; 50) wenigstens einem Teil der zweiten Schlitze (10; 20, 30; 40; 50) zugekehrt angeordnet ist, wobei die Wand (5) ausgebildet ist, damit die zweiten Schenkel der ersten Schlitze (10; 20, 30; 40; 50) den ersten Schenkeln der zweiten Schlitze (10; 20, 30; 40; 50) überlagert sind.

9. Lagerbehältnis (1) gemäß zumindest Anspruch 8, **dadurch gekennzeichnet, dass** die ersten und zweiten Schlitze (10; 20, 30; 40; 50) gemäß zumindest einer der nachfolgenden, untereinander kombinierbaren Konfigurationen angeordnet sind:
- die ersten und die zweiten Schlitze (10; 20, 30) weisen identische Orientierungen auf;
- die ersten und die zweiten Schlitze (40; 50) weisen zwischen dem ersten Abteil (6) und dem zweiten Abteil (7) inverse Orientierungen auf;
- die ersten Schlitze (20, 30; 50) weisen in dem ersten Abteil (6) untereinander alternierend inverse Orientierungen und die zweiten Schlitze (20, 30; 50) weisen in dem zweiten Abteil (7) untereinander alternierend inverse Orientierungen auf.

10. Verfahren zum Entladen wenigstens eines Stapels flacher Gegenstände (100) auf Kante aus einem Lagerbehältnis (1), dessen Grundplatte (2) die Kante der flachen Gegenstände (100) aufnimmt und dessen wenigstens zwei sich gegenüber stehenden inneren Stützflächen (72, 82, 92) eine Flanke des Stapels aufnehmen, wobei die Grundplatte (2) durch wenigstens einen Schlitz (10; 20, 30; 40; 50) durchsetzt ist, in dem wenigstens ein beweglicher Finger (110) zwischen einer zurückgezogenen Position, in der das freie Ende des beweglichen Fingers (110) den Schlitz (10; 20, 30; 40; 50) nicht durchsetzt, und einer aktiven Position, in der der bewegliche Finger (110) den Schlitz (10; 20, 30; 40; 50) bis zu der Öffnung (9) des Lagerbehältnisses (1) derart durchsetzt, dass die Kante der flachen Gegenstände (100) des Stapels auf dem freien Ende ruht und von der Grundplatte (2) entfernt werden kann, um das Entladen des Stapels aus dem Lagerbehältnis (1) sicherzustellen, verlagert wird, bei dem wenigstens ein Lagerbehältnis (1) eingesetzt wird, das wenigstens eine in jeder der Stützflächen (72, 82, 92) ausgesparte Rinne (70), die sich längs von der Grundplatte (2) bis zu der Öffnung (9) erstreckt, umfasst,
**dadurch gekennzeichnet,**
**dass** vor dem Verlagern des beweglichen Fingers (110) in einem ersten Schritt wenigstens ein Arm (120) in jede der Rinnen (70) eingeführt wird, derart, dass der Arm (120) ohne Kontakt mit der Flanke des in dem Lagerbehältnis (1) enthaltenen Stapels ist, und dass in einem zweiten Schritt der Arm (120) derart versetzt wird, dass die Flanke von der entsprechenden Stützfläche (72) entfernt wird, und
**dass** während der Verlagerung des beweglichen Fingers (110) zwischen seiner zurückgezogenen Position und seiner aktiven Position zugleich der Arm (120) verlagert wird.

11. Verfahren zum Beladen wenigstens eines Stapels flacher Gegenstände (100) auf Kante in ein Lagerbehältnis (1), dessen Grundplatte (2) die Kante der flachen Gegenstände (100) aufnehmen soll und dessen wenigstens zwei sich gegenüber stehenden inneren Stützflächen (72, 82, 92) eine Flanke des Stapels aufnehmen sollen, wobei die Grundplatte (2) durch wenigstens einen Schlitz (10; 20, 30; 40; 50) durchsetzt ist, in dem wenigstens ein beweglicher Finger (110) zwischen einer aktiven Position, in der der bewegliche Finger (110) den Schlitz (10; 20, 30; 40; 50) bis zu der Öffnung (9) des Lagerbehältnisses (1) durchsetzt, derart, dass die Kante der flachen Gegenstände (100) des Stapels auf dem freien Ende des beweglichen Fingers (110) platziert werden kann, und einer zurückgezogenen Position, in der das freie Ende des beweglichen Fingers (110) den Schlitz (10; 20, 30; 40; 50) nicht mehr durchsetzt, derart, dass die Kante der in das Lagerbehältnis geladenen flachen Gegenstände (100) auf der Grundplatte (2) ruht, verlagerbar ist, bei dem wenigstens ein Lagerbehältnis (1) eingesetzt wird, das wenigstens eine in jeder der Stützflächen (72, 82, 92) ausgesparte Rinne (70) umfasst, die sich längs von der Grundplatte (2) bis zu der Öffnung (9) erstreckt, **dadurch gekennzeichnet,**
**dass** vor dem Verlagern des beweglichen Fingers (110) mittels eines Arms (120) die Flanke von jeder der Stützflächen (72) versetzt wird, und dass während des Verlagerns der Arm in den entsprechenden Schlitz (70) eingeführt wird, derart, dass die Flanke des Stapels nicht in Kontakt mit der Stützfläche (72) steht, und
**dass** während des Verlagerns des beweglichen Fingers (110) zwischen seiner aktiven Position und seiner zurückgezogenen Position der Arm (120) gleichzeitig bewegt wird.

## Claims

1. A storage tray (1) for automatically loading and unloading stacks of flat articles (100) stacked on edge, said storage tray (1) having a bottom plate (2) and panels (4A, 4B, 5) parallel in pairs defining at least one compartment (6, 7) provided with an opening (9) that is provided opposite from said bottom plate (2), said compartment (6, 7) being designed to receive at least one stack of flat articles (100), provision being made for the edges of said flat articles to rest on said bottom plate (2) and for at least one flank of said stack to bear against a bearing surface (72, 82, 92) formed by the inside face of one of said panels (4A, 5), wherein said at least two of the said bearing surfaces (72, 82, 92) facing are each of them provided with at least one groove (70, 80, 90) having their end walls set back, said grooves (70, 80, 90) being disposed facing each other in pairs, and the grooves extending longitudinally from said bottom plate (2) up to said opening (9),said storage tray being **characterized in that** each of the groove (70, 80, 90) being suitable for longitudinally receiving a tooth of a comb that is inserted into it without coming into contact with said flat articles (100), and that, once inserted, is designed to move said flank of said stack laterally away from said corresponding bearing surface (72, 82, 92), **in that** said bottom plate (2) is provided with at least one through slot (10; 20, 30; 40; 50), each of the ends of which is disposed in direct alignment with respectively one of said grooves (70, 80, 90), said slot (40; 50) being substantially of a shape chosen from T-shaped, and Z-shaped, the first and the second branch (11, 12; 21, 22; 31, 32; 41, 42; 51, 52) of each slot defined the ends of said slot (40, 50) and a trunk (43, 53, 13, 23, 33) between the two branches and having a profile that is substantially identical to the profile of the respective corresponding groove (70, 80, 90), said slot (10; 20, 30; 40; 50) and each of said grooves (70, 80, 90) being suitable for allowing at least one moving finger (110) to pass through that is mounted to slide between a retracted position in which the free end of said moving finger (110) does not pass through said slot (10; 20, 30; 40; 50) and an active position in which said moving finger (110) passes through said slot (10; 20, 30; 40; 50) and is engaged in one of said grooves (70, 80, 90) so that the edges of all of said flat articles (100) of said stack rest on said free end and can be moved away from or towards said bottom plate (2) for the purpose of automatically unloading said flat articles (100) from said storage tray (1) or of automatically loading said articles (100) into said storage tray (1), without said flank of said stack coming into contact with said bearing surface (72, 82, 92).

2. A storage stray (1) according to the preceding claim, **characterized in that** said panels comprise at least two outer panels (4A) that are substantially mutually parallel, **in that** said "at least one groove" comprises first grooves (70) provided in the inside faces of said outer panels (4A), **in that** the outside face of each of said outer panels (4A) is provided with at least one additional groove (71) extending substantially parallel to said corresponding first groove (70) relative to which it is offset transversely, said additional groove (71) being suitable for longitudinally receiving at least one settling element designed to position said slot (10; 20, 30; 40; 50) relative to said moving finger (110).

3. A storage tray (1) according to the preceding claim, **characterized in that** it is provided with a plurality of first grooves (70) and of additional grooves (71) disposed in alternation with one another.

4. A storage tray (1) according to the preceding claim, **characterized in that**, in the first midplane (P1) of each outer panel (4A), said first grooves (70) and said additional grooves (71) are in part superposed relative to one another so that said first midplane (P1) simultaneously intersects said first grooves (70) and said additional grooves (71).

5. A storage tray (1) according to any one of the preceding claims, **characterized in that** said "at least one compartment" comprises at least a first compartment (6) and a second compartment (7) that are mutually adjacent and that are defined by at least one panel defining a partition (5) subdividing said storage tray (1), **in that** said "at least one groove" further comprises at least one second groove (80) and at least one third groove (90) that are provided in the opposite inside walls of said partition (5), and **in that** said "at least one slot" comprises first slots (10; 20, 30; 40; 50) provided in said first compartment (6) and second slots (10; 20, 30; 40; 50) provided in said second compartment (7).

6. A storage tray (1) according to the preceding claim, **characterized in that** it is provided with a plurality of second grooves (80) and of third grooves (90) disposed in alternation with one another.

7. A storage tray (1) according to the preceding claim, **characterized in that**, in the second midplane (P2) of said partition (5), said second grooves (80) and said third grooves (90) are in part superposed relative to one another so that said second midplane (P2) simultaneously intersects said second grooves (80) and said third grooves (90).

8. A storage tray (1) according to claims 5 and 7 and to claim 1, **characterized in that** at least some of said first slots (10; 20, 30; 40; 50) are disposed in register with at least some of said second slots (10; 20, 30; 40; 50), said partition (5) being arranged so that said second branches of said first slots (10; 20, 30; 40; 50) are superposed on said first branches of said second slots (10; 20, 30; 40; 50).

9. A storage tray (1) according to at least claim 8, **characterized in that** said first and second slots (10; 20, 30; 40; 50) are disposed in at least one of the following configurations that can be combined:
- the first and second slots (10; 20, 30) point in identical directions;
- the first and second slots (40; 50) point in opposite directions respectively in said first compartment (6) and in said second compartment (7);
- said first slots (20, 30; 50) point in mutually opposite directions in alternation in said first compartment (6), and said second slots (20, 30; 50) point in mutually opposite directions in alternation in said second compartment (7).

10. A method of unloading at least one stack of flat articles (100) on edge from a storage tray (1) having a bottom plate (2) that receives the edges of said flat articles (100) and having at least two inside bearing surfaces (72, 82, 92) facing each other that receive a flank of said stack, said bottom plate (2) being provided with at least one through slot (10; 20, 30; 40; 50) through which at least one moving finger (110) is caused to slide between a retracted position in which the free end of said moving finger (110) does not pass through said slot (10; 20, 30; 40; 50) and an active position in which said moving finger (110) passes through said slot (10; 20, 30; 40; 50) to the opening (9) of said storage tray (1) so that the edges of said flat articles (100) of said stack rest on said free end and can be moved away from said bottom plate (2) for the purpose of unloading said stack from said storage tray (1), wherein at least one storage tray (1) is used that is provided with at least one groove (70) provided in each of said bearing surfaces (72, 82, 92) and extending longitudinally from said bottom plate (2) to said opening (9), said method being **characterized in that** before said moving finger (110) is caused to slide, and in a first stage, at least one tooth (120) is inserted into each of said grooves (70) so that said tooth (120) is not in contact with the flank of said stack contained in said storage tray (1) and so that, in a second stage, said arm (120) is shifted so as to move said flank away from said corresponding bearing surface (72), and **in that**, while said moving finger (110) is sliding from its retracted position to its active position, said tooth (120) is moved simultaneously.

11. A method of loading at least one stack of flat articles (100) on edge into a storage tray (1) having a bottom plate (2) designed to receive the edges of said flat articles (100) so that they bear against it, and having at least two inside bearing surfaces (72, 82, 92) facing each other designed to receive a flank of said stack, said bottom plate (2) being provided with at least one through slot (10; 20, 30; 40; 50) through which at least one moving finger (110) is caused to slide between an active position in which said moving finger (110) passes through said slot (10; 20, 30; 40; 50) to the opening (9) of said storage tray (1) so that the edges of said flat articles (100) of said stack can be placed on the free end of the moving finger (110) and a retracted position in which the free end of said moving finger (110) no longer passes through said slot (10; 20, 30; 40; 50) so that the edges of said flat articles (100) loaded in said storage tray (1) rest on said bottom plate (2), wherein at least one storage tray (1) is used that is provided with at least one groove (70) provided in each of said bearing surfaces (72, 82, 92) and extending longitudinally from said bottom plate (2) to said opening (9), said method being **characterized in that** before said moving finger (110) is caused to slide, said flank is shifted away from each of said bearing surfaces (72) by means of at least one tooth (120), **in that**, while said moving finger is sliding, said tooth (120) is inserted into said corresponding groove (70) so that said flank of said stack is not in contact with said bearing surface (72), and **in that**, while said moving finger (110) is sliding from its active position to retracted position, said tooth (120) is moved simultaneously.
